# EUROPEAN PATENT APPLICATION

(11) **EP 1 811 219 A1**
(43) Date of publication of application: **25.07.2007**
(21) Application number: 06100705.0
(22) Date of filing: 23.01.2006
(51) Int. Cl.: F16L 11/04, B32B 1/08, B32B 27/34, C08L 27/12, C08L 41/00, C08L 29/10, C08L 77/00

(54) **Laminates with fluoropolymeric and bonding layers**

(71) Applicant: SOLVAY (Société Anonyme), 1050 Bruxelles (BE)
(72) Inventor: Bushelman, Corine, 30040, Cumming (US); Doty, James K., 30022, Alpharetta (US); Brinati, Giulio, 20139, Milano (IT)
(74) Representative: Jacques, Philippe

(57) **Abstract**

The invention relates to a multilayer polymer structure [structure (S)] comprising a layer (α) comprising at least one polyamide [polymer (A)], said layer (α) being linked to a layer (γ) comprising at least one melt-processible fluoropolymer substantially free from recurring units derived from functional monomers [polymer (F)] via a layer (β), said layer (β) comprising a polymer composition (C-1), said polymer composition (C-1) comprising from 100% to 3% by weight of at least one functional fluoropolymer [polymer (I)], with respect to the total weight of the composition, and from 0 to 97 % by weight of at least one melt-processible fluoropolymer substantially free from recurring units derived from functional monomers [polymer (F)], with respect to the total weigh of the composition.
The multilayer structures of the invention enables obtaining structures with excellent adhesion between fluoropolymers and polyamides, whose components can withstand high processing temperature, such as those required for instance for aromatic polyamide processing and extremely harsh environment.

## Description

### FIELD OF THE INVENTION

The present invention relates to an advance in the joining together of interfaces of a melt-processible fluoropolymer-based material and of a polyamide. The invention is thus directed to structures with multiple polymeric layers, to a process for their manufacture and to compositions useful for this purpose.

Additional advantages and other features of the present invention will be set forth in part in the description that follows and in part will become apparent to those having ordinary skill in the art upon examination of the following or may be learned from the practice of the present invention. The advantages of the present invention may be realized and obtained as particularly pointed out in the appended claims. As will be realized, the present invention is capable of other and different embodiments, and its several details are capable of modifications in various obvious respects, all without departing from the present invention. The description is to be regarded as illustrative in nature, and not as restrictive.

### BACKGROUND OF THE INVENTION

The barrier properties of fluoropolymers make them quite desirable candidates in the area of, e.g., fuel handling. In situations where low, or zero, emissions are desired, multilayer structures such as multilayer tubing is used However, fluoropolymers typically do not bond well to other polymeric materials, and the resultant structures thus provide unsatisfactory physical properties. This is particularly true when fluoropolymers are used structures where contact with, e.g., polyamides, is contemplated.

One solution to this problem is described in U.S. 6,524,671. Here, a maleic anhydride-grafted ethylene/propylene/diene copolymer composition is blended as a dispersed phase in the polyamide prior to use, and/or the fluoropolymer is modified by grafting. As described in this reference, these modified materials must be used in the absence of an intervening tie layer in order to provide for proper bonding/adhesion.

Another proposed solution has been the provision of a unique tie layer. For example, U.S. 5,756,199 describes a maleic anhydride grafted ETFE (believed to correspond to DuPont's TEFZEL^{®} product) as a tie layer between fluoropolymers and polyamides. However, the applicant observed that this grafted material, although described as an adhesive for dissimilar materials, cannot be used satisfactorily with high melting polyamide such as AMODEL^{®} 1000 polyphthalamides (yet exemplified in DuPont's patent) : surface defects (bubles) are formed.

Fluoropolymers comprising ion exchange groups that are useful herein have been described before in the context of, e.g., membranes and catalysts (U.S. 5,863,610), as blends with other fluoropolymers for use in ion exchange membranes (EP 0 345 964), as coatings for protective garments (U.S. 4,469,744, U.S. 4,515,761, U.S. 4,943,473), and as antistatic materials (U.S. 5,712,040). A process for preparing useful fluoropolymers comprising SO₂F (fluorosulfonyl) ion exchange groups is described in U.S. 6,555,639. However, while such materials are know in principal, they have never before been used in the construction of, e.g., a multilayer structure comprising a first layer of fluoropolymer, a second layer of polyamide, and an intermediate polymeric tie layer comprising fluoropolymers comprising functional groups (such as, for instance, -SO₂F (fluorosulfonyl) groups), or a multilayer tube comprising a layer of polyamide and, in contact therewith, a layer comprising a blend of at least one fluoropolymer and at least one fluoropolymer comprising said functional groups.

Similarly, the prior art has not described nor recognized the utility of blends of at least one polyamide or at least one fluoropolymer and at least one fluoropolymer comprising said functional groups for bonding together polyamides and fluoropolymers.

The present invention aims at providing a material that is an adhesive between dissimilar materials such as, e.g., fluoropolymers and polyamides. The desired material preferably has, simultaneously, a broad working temperature while being useful as both a tie layer in multilayer structures and as compatibilizing agent or emulsifier in polymer compositions containing fluoropolymers and polyamides.

### SUMMARY OF THE INVENTION

The present invention addresses the needs noted above as well as the problems of the prior art, and relates to the use of a polymer composition comprising at least one functional fluoropolymer [polymer (I)] useful both as a tie layer and as a dispersed phase to advantageously bond together fluoropolymers and polyamides.

To this end, the invention relates to a multilayer polymer structure [structure (S)] comprising a layer (α) comprising at least one polyamide [polymer (A)], said layer (α) being linked to a layer (γ) comprising at least one melt-processible fluoropolymer substantially free from recurring units derived from functional monomers [polymer (F)] via a layer (β), said layer (β) consisting of a polymer composition (C-1), said polymer composition (C-1) comprising from 100 % to 3 % by weight of at least one functional fluoropolymer [polymer (I)], with respect to the total weight of the composition, and from 0 to 97 % by weight of at least one melt-processible fluoropolymer substantially free from recurring units derived from functional monomers [polymer (F)], with respect to the total weight of the composition.

The multilayer structures of the invention enables obtaining structures with excellent adhesion between fluoropolymers [polymers (F)] and polyamides [polymers (A)], whose components can withstand high processing temperature, such as those required for instance for aromatic polyamide processing, and extremely harsh environment.

Still an object of the invention is a process for manufacturing said multilayer polymer structure [structure (S)].

The invention also pertains to a shaped article comprising the structure (S) as above defined.

Still an object of the invention is a multilayer tube [tube (T-1)] comprising a layer (α) comprising at least one polyamide [polymer (A)] and a layer (β) comprising a polymer composition (C-1) as above described.

Still another object of the invention is a multilayer tube [tube (T-2)] comprising a layer (γ) comprising at least one melt-processible fluoropolymer substantially free from recurring units derived from functional monomers [polymer (F)] and a layer (δ) comprising a polymer composition (C-2), said composition comprising from 100 % to 3 % by weight of at least one functional fluoropolymer [polymer (I)] with respect to the total weight of the composition and from 0 to 97 % by weight of at least one polyamide [polymer (A)] with respect to the total weight of the composition.

Finally, the invention relates to a polymer composition (C-3) useful for bonding polymer (F) and polymer (A) interfaces, said composition (C-3) comprising :
(c1) at least one polyamide [polymer (A)];
(c2) at least one functional fluoropolymer [polymer (I)]
(c3) optionally, at least one impact modifier (I-1).

### DETAILED DESCRIPTION OF THE INVENTION

For the purpose of the present invention, the term "polymer" is intended to denote any material consisting essentially of recurring units, and having a molecular weight above 2000.

The term "polyamide" [polymer (A)] is intended to denote a polymer comprising recurring units, more than 50 % of said recurring units comprising an amide moiety of formula (I) :

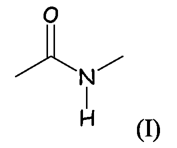

Typically, polyamides are formed by reacting a mixture comprising one or more diamine and one or more diacid monomer units (e.g., nylon 6,6), and/or by polymerizing an amino carboxylic acid or caprolactam (e.g., nylon 6). Linear, aliphatic polyamides are well known materials.

The polyamide can be notably an aliphatic polyamide such as nylon 6, nylon 66 or nylon 12, a polyamide of which less than or equal to 50 mole % of the recurring units comprise at least one aromatic group, or an aromatic polyamide as defined hereafter.

Preferably the polymer (A) is an aromatic polyamide [polymer (AA)].

For the purpose of the present invention, "aromatic polyamide" and "polymer (AA)" is intended to denote any polyamide comprising recurring units, more than 50 mole % of said recurring units comprising at least one aromatic group and an amide moiety of formula (I) (aromatic recurring units, hereinafter).

In the rest of the text, the expressions "aromatic polyamide" and "polymer (AA)" are understood, for the purposes of the present invention, both in the plural and the singular, that is to say that the inventive structures or compositions may comprise one or more than one polymer (AA).

Suitable aromatic polyamides for use in the present invention are disclosed in previously referenced U.S. Patent Nos. 5,436,294; 5,447,980; and RE34,447 to Poppe et al. Other aromatic polyamides that may be used herein are described in U.S. patents 6,531,529; 6,359,055; 5,665,815; 6,524,671; 6,306,951; and 5,416,189; all incorporated herein by reference.

The aromatic polyamide (AA) can be amorphous or semi-crystalline. Preferably the polymer (AA) is semi-crystalline.

The term semi-crystalline is intended to denote a polymer having a heat of fusion of more than 1 J/g when measured by Differential Scanning Calorimetry (DSC) at a heating rate of 10°C/min, according to ASTM D 3418.

Preferably the semi-crystalline polymer (AA) of the invention has a heat of fusion of at least 3 J/g, more preferably of at least 5 J/g, most preferably at least 10 J/g.

Should the polymer (AA) be semi-crystalline, it has a melting point of advantageously at least 240°C, preferably at least 250°C, more preferably at least 260°C, even more preferably at least 270°C, most preferably at least 290°C.

Should the polymer (AA) be semi-crystalline, it has a melting point of advantageously at most 360°C, preferably at most 350°C, more preferably at most 340°C, most preferably at most 330°C.

Melting point of polymer (AA) is generally determined by Differential Scanning Calorimetry (DSC) according to ASTM standard D3418.

The aromatic polyamide (AA) may have an inherent viscosity of from 0.5 dl/g to 2.5 dl/g when determined at 30°C on a 0.4 weight percent solution in a 60/40 weight to weight phenol/l, 1,2,2-tetrachloroethane solvent mixture. Preferably, the inherent viscosity of the polymer (AA) is 0.7 or greater, more preferably 0.9 or greater, still more preferably 1 or greater. In addition, the inherent viscosity of the polymer (AA) is preferably 2.2 or less, more preferably 2.1 or less, and still more preferably 2 or less.

The aromaticity of the aromatic recurring units of the polymer (AA) can come notably from the diacid (or derivative thereof) and/or from the diamine and/or from the aminoacid used in the polycondensation reaction. Non limitative examples of aromatic diacids are phthalic acids and naphthalenedicarboxylic acids. Metaxylylenediamine is an example of aromatic diamine.

Preferably the polymer (AA) is a semi-aromatic polyamide [polymer (SAP)], that is to say that it is an aromatic polyamide as above defined which comprises recurring units derived from the polycondensation reaction between at least one non-aromatic diacid (or derivatives thereof) and an aromatic or non-aromatic diamine, and/or recurring units derived from the polycondensation reaction between an aromatic or non-aromatic diacid (or derivatives thereof) and at least one non-aromatic diamine, and/or recurring units derived from the polycondensation reaction of at least one non-aromatic amino-carboxylic acid (or derivatives thereof).

A diacid (or derivative thereof) or a diamine is considered for the purposes of this invention as "aromatic" when it comprises one or more than one aromatic group. A diacid (or derivative thereof) or a diamine or an amino-carboxylic acid (or derivative thereof) is considered for the purposes of this invention as "non-aromatic" when it is free from aromatic group.

Very preferably, the polymer (SAP) comprise recurring units derived from an aromatic diamine and an aliphatic diacid (or derivatives thereof) and/or recurring units derived from an aromatic diacid (or derivatives thereof) and an aliphatic diamine.

According to a first embodiment of the invention, the polymer (A) is a semi-aromatic polyamide [polymer (SAP-1)] comprising recurring units, more than 50 mole % of said recurring units being obtained by the polycondensation reaction between at least one aliphatic diacid or derivative thereof and at least one aromatic diamine.

The term diacid derivative is intended to encompass acid halogenides, especially chlorides, acid anhydrides, acid salts, acid amides and the like, which can be advantageously used in the polycondensation reaction.

The expression "at least one aliphatic diacid or derivative thereof" and "at least one aromatic diamine" are understood to mean that one or more than one aliphatic diacid or derivative therof and one or more than one aromatic diamine can be made to react as above specified.

Non limitative examples of aromatic diamines are notably m-phenylene diamine (MPD), p-phenylene diamine (PPD), 3,4'-diaminodiphenyl ether (3,4'-ODA), 4,4'-diaminodiphenyl ether (4,4'-ODA), metaxylylenediamine (MXDA) :

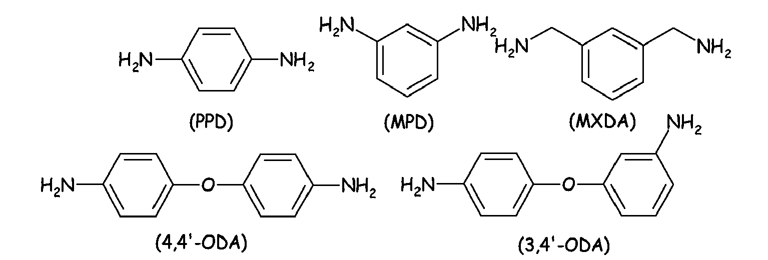

The aromatic diamine is preferably metaxylylenediamine (MXDA).

Non limitative examples of aliphatic diacids are notably oxalic acid (HOOC-COOH), malonic acid (HOOC-CH₂-COOH), succinic acid [HOOC-(CH₂)₂-COOH], glutaric acid [HOOC-(CH₂)₃-COOH], 2,2-dimethyl-glutaric acid [HOOC-C(CH₃)₂-(CH₂)₂-COOH], adipic acid [HOOC-(CH₂)₄-COOH], 2,4,4-trimethyl-adipic acid [HOOC-CH(CH₃)-CH₂-C(CH₃)₂- CH₂-COOH], pimelic acid [HOOC-(CH₂)₅-COOH], suberic acid [HOOC-(CH₂)₆-COOH], azelaic acid [HOOC-(CH₂)₇-COOH], sebacic acid [HOOC-(CH₂)₈-COOH], undecanedioic acid [HOOC-(CH₂)₉-COOH], dodecandioic acid [HOOC-(CH₂)₁₀-COOH], tetradecandioic acid [HOOC-(CH₂)₁₁-COOH].

The aliphatic diacid is preferably adipic acid.

As above mentioned, such aliphatic diacids can be used in the polycondensation reaction notably under the form of free acid and acid chloride.

Preferred polymers (SAP-1) according to the first embodiment of the invention are PMXDA polymers consisting essentially of recurring units derived from the polycondensation reaction between adipic acid or derivative thereof and metaxylylenediamine.

PMXDA polymers suitable for the purposes of the invention are notably available as IXEF^{®} PMXDAs from Solvay Advanced Polymers, L.L.C.

According to a second embodiment of the invention, the polymer (A) is a semi-aromatic polyamide [polymer (SAP-2)] comprising recurring units, more than 50 mole % of said recurring units being obtained by the polycondensation reaction between at least one aromatic diacid or derivative thereof and at least one aliphatic diamine.

The expression "at least one aromatic diacid or derivative thereof" and "at least one aliphatic diamine" are understood to mean that one or more than one aromatic diacid or derivative therof and one or more than one aliphatic diamine can be made to react as above specified.

Non limitative examples of aliphatic diamines are notably 1,2-diaminoethane, 1,2-diaminopropane, propylene-1,3-diamine, 1,3-diaminobutane, 1,4-diaminobutane (putrescine), 1,5-diaminopentane (cadaverine), 1,6-hexanediamine or hexamethylenediamine (HMDA), 1,8-diaminooctane, 1,10-diaminodecane, 1,12-diaminododecane, 1-amino-3*-N*-methyl-*N*-(3-aminopropyl)-aminopropane.

Preferred aliphatic diamine is hexamethylenediamine (HMDA).

Aromatic diacids and derivative thereof employed in the polycondensation reaction to yield the polymer (SAP-2) are not particularly restricted. Non limitative examples of aromatic diacids are notably phthalic acids, including isophthalic acid (IPA), terephthalic acid (TPA) and (ortho)phthalic acid (PA), naphalendicarboxylic acids, 2,5-pyridinedicarboxylic acid, 2,4-pyridinedicarboxylic acid, 3,5-pyridinedicarboxylic acid, 2,2-bis(4-carboxyphenyl)propane, bis(4-carboxyphenyl)methane, 2,2-bis(4-carboxyphenyl)hexafluoropropane, 2,2-bis(4-carboxyphenyl)ketone, 4,4'-bis(4-carboxyphenyl)sulfone, 2,2-bis(3-carboxyphenyl)propane, bis(3-carboxyphenyl)methane, 2,2-bis(3-carboxyphenyl)hexafluoropropane, 2,2-bis(3-carboxyphenyl)ketone, bis(3-carboxyphenoxy)benzene.

Preferably, the polymer (SAP-2) according to the second embodiment of the invention is a polyphthalamide, i.e. an aromatic polyamide comprising recurring units, more than 50 mole % of said recurring units being obtained by the polycondensation reaction between at least one phthalic acid, chosen among IPA, TPA and PA, or derivative thereof, and at least one aliphatic diamine.

For the avoidance of doubt, chemical structures of IPA, TPA, PA are depicted herein below :

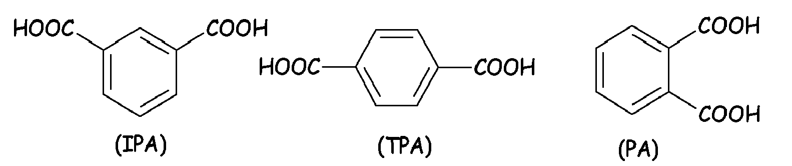

Suitable polyphthalamides are notably available as AMODEL^{®} polyphthalamides from Solvay Advanced Polymers, L.L.C..

Among polyphthalamides as above defined, polyterephthalamides are often preferred. However, poly(tere/iso)phthalamides may be preferred in certain particular embodiments of the present invention.

For the purpose of the present invention, poly(tere/iso)phthalamides are defined as aromatic polyamides of which :
(i) more than 50 mole % of the recurring units are formed by the polycondensation reaction between terephthalic acid, isophthalic acid and at least one aliphatic diamine;
(ii) more than 25 and up to 50 mole % of the recurring units are formed by the polycondensation reaction between terephthalic acid and at least one aliphatic diamine; and
(iii) from 1 to 25 mole % of the recurring units are formed by the polycondensation reaction between isophthalic acid and at least one aliphatic diamine.

Preferably, poly(tere/iso)phthalamides further comprise recurring units formed by the polycondensation reaction between at least one aliphatic diacid and at least one aliphatic diamine. In addition, poly(tere/iso)phthalamides are preferably free of recurring units formed by the polycondensation reaction between (ortho)phthalic acid (PA) and at least one diamine (aliphatic or aromatic).

For the purpose of the present invention, polyterephthalamides are defined as aromatic polyamides of which more than 50 mole % of the recurring units are formed by the polycondensation reaction between terephthalic acid and at least one aliphatic diamine.

A first class of preferred polyterephthalamides consists of polyterephthalamides the recurring units of which are formed by the polycondensation reaction between terephthalic acid and at least one aliphatic diamine [class (I)].

A second class of preferred polyterephthalamides consists of polyterephthalamides the recurring units of which are formed by the polycondensation reaction between terephthalic acid, isophthalic acid and at least one aliphatic diamine [class (II)].

A third class of preferred polyterephthalamides consists of polyterephthalamides the recurring units of which are formed by the polycondensation reaction between terephthalic acid, at least one aliphatic diacid and at least one aliphatic diamine [class (III)]. Such recurring units are respectively referred to as terephthalamide and aliphatic acid-amide recurring units.

Within class (III), a first preferred subclass consists of polyterephthalamides in which the mole ratio of the terephthalamide recurring units with respect to the total number of moles of the recurring units (i.e. the terephthalamide plus the aliphatic acid-amide recurring units) is 60 mole % or more; in addition, it is advantageously 80 mole % or less, and preferably 70 mole % or less [subclass (III-1)].

Within class (III), a second preferred subclass consists of polyterephthalamides in which the mole ratio of the terephthalamide recurring units with respect to the total number of moles of the recurring units (i.e. the terephthalamide plus the aliphatic acid-amide recurring units) is less than 60 mole % [subclass (III-2)].

A fourth class of preferred polyterephthalamides consists of polyterephthalamides the recurring units of which are formed by the polycondensation reaction between terephthalic acid, isophthalic acid, at least one aliphatic diacid and at least one aliphatic diamine [class (IV)].

Aliphatic acids and aliphatic amines useful for classes (I) to (IV) are those above described as suitable for polymers (SAP-1) and (SAP-2).

Preferred aliphatic diacid is adipic acid.

Preferred aliphatic diamine is hexamethylenediamine (HMDA).

Within the context of the present invention the mention "at least one melt-processible fluoropolymer [polymer (F)]" is intended to denote one or more than one polymer (F). Mixtures of polymers (F) can be advantageously used for the purposes of the invention.

In the rest of the text, the expressions "melt-processible fluoropolymer" and "polymer (F)" are understood, for the purposes of the present invention, both in the plural and the singular, that is to say that the inventive composition may comprise one or more than one polymer (F).

For the purpose of the present invention, by the term "melt-processible" is meant that the polymer (F) can be processed (i.e. fabricated into shaped articles such as films, fibers, tubes, wire coatings and the like) by conventional melt extruding, injecting or casting means. This generally requires that the melt viscosity at the processing temperature be no more than 10⁷ poise, preferably in the range from 10³ to 10⁷ poise, and most preferably from 10⁴ to 10⁶ poise.

Thus, polymer (F) is distinguishable from "non melt-processible" fluoropolymers, like notably PTFE, which cannot be processed by conventional melt extruding, injecting or casting means, and which generally exhibit a melt viscosity at the processing temperature exceeding 10⁷ poise.

The melt viscosity of the polymer (F) can be measured according to ASTM D-1238-52T, using a cylinder, orifice and piston tip made of a corrosion-resistant alloy, charging a 5.0 g sample to the 9.5 mm inside diameter cylinder which is maintained at a temperature exceeding melting point, extruding the sample 5 minutes after charging through a 2.10 mm diameter, 8.00 mm long square-edged orifice under a load (piston plus weight) of 5 kg. Melt viscosity is calculated in poise from the observable extrusion rate in grams per minute.

The polymer (F) of the invention is advantageously thermoplastic.

The term "thermoplastic" is understood to mean, for the purposes of the present invention, polymers existing, at room temperature (25°C), below their melting point if they are semi-crystalline, or below their Tg if amorphous. These polymers have the property of becoming soft when they are heated and of becoming rigid again when hey are cooled, without there being an appreciable chemical change. Such a definition may be found, for example, in the encyclopedia called "Polymer Science Dictionary", Mark S.M. Alger, London School of Polymer Technology, Polytechnic of North London, UK, published by Elsevier Applied Science, 1989.

Thermoplastic polymers are thus distinguishable from elastomers.

To the purpose of the invention, the term "elastomer" is intended to designate a true elastomer or a polymer resin serving as a base constituent for obtaining a true elastomer.

True elastomers are defined by the ASTM, Special Technical Bulletin, No. 184 standard as materials capable of being stretched, at room temperature, to twice their intrinsic length and which, once they have been released after holding them under tension for 5 minutes, return to within 10 % of their initial length in the same time.

Polymer resins serving as a base constituent for obtaining true elastomers are in general amorphous products having a glass transition temperature (Tg) below room temperature (25°C). In most cases, these products correspond to copolymers having a T_{g} below 0°C and including reactive functional groups (optionally in the presence of additives) allowing the true elastomer to be formed.

Preferably, the polymer (F) is semi-crystalline.

The term "semi-crystalline" is intended to denote a polymer having a heat of fusion of more than 1 J/g when measured by Differential Scanning Calorimetry (DSC) at a heating rate of 10°C/min, according to ASTM D 3418.

Preferably, the semi-crystalline polymer (F) of the invention has a heat of fusion of at least 3 J/g, more preferably of at least 5 J/g, most preferably at least 10 J/g.

For the purpose of the present invention, "fluoropolymer" is intended to denote any polymer comprising recurring units (R), more than 25 % wt of said recurring units (R) being derived from at least one ethylenically unsaturated monomer comprising at least one fluorine atom (hereinafter, fluorinated monomer).

Polymer (F) is substantially free from recurring units derived from functional monomers.

For the avoidance of doubt, it should be understood that polymer (F) and polymer (I) are thus distinguishable, as the former is substantially free from recurring units derived from functional monomers, while the latter comprises a substantial amount of recurring units derived from at least one functional monomer.

The expression "substantially free from recurring units derived from functional monomers" is understood to mean that, whilst the polymer (F) may comprise no recurring units derived from functional monomer, it would be unduly limiting on the scope of the invention to specify that this polymer (F) necessarily does not comprise any recurring unit derived from a functional monomer; however, the proportion of such recurring units, if any, in the polymer (F), is very small such that the polymer (F) alone is effectively not modified in its properties, for instance it is not capable of acting as an ionexchange material. For example, the polymer (F) may be entirely free from recurring units derived from functional monomer or, if such recurring units are present, they may be present in an amount of less than 1 % by moles, preferably less than 0.05 % by moles based on the total moles of recurring units. Preferably, polymer (F) is entirely free from recurring units derived from functional monomers.

The fluoropolymer comprises preferably more than 30 % wt, more preferably more than 40 % wt of recurring units derived from the fluorinated monomer.

The fluorinated monomer can further comprise one or more other halogen atoms (Cl, Br, I). Shall the fluorinated monomer be free of hydrogen atom, it is designated as per(halo)fluoromonomer. Shall the fluorinated monomer comprise at least one hydrogen atom, it is designated as hydrogen-containing fluorinated monomer.

Non limitative examples of fluorinated monomers are notably tetrafluoroethylene (TFE), vinylidene fluoride (VdF), chlorotrifluoroethylene (CTFE), and mixtures thereof.

Optionally, the fluoropolymer may comprise recurring units derived one first monomer, said monomer being a fluorinated monomer as above described, and at least one other monomer (hereinafter, the comonomer).

Hereinafter, the term comonomer should be intended to encompass both one comonomer and two or more comonomers.

The comonomer can notably be either hydrogenated (i.e. free of fluorine atom) or fluorinated (i.e. containing at least one fluorine atom).

Non limitative examples of suitable hydrogenated comonomers are notably ethylene, propylene, vinyl monomers such as vinyl acetate, acrylic monomers, like methyl methacrylate, acrylic acid, methacrylic acid and hydroxyethyl acrylate, as well as styrene monomers, like styrene and p-methylstyrene.

Non limitative examples of suitable fluorinated comonomers are notably :
- C₃-C₈ fluoro- and/or perfluoroolefins, such as hexafluoropropene, pentafluoropropylene, and hexafluoroisobutylene;
- C₂-C₈ hydrogenated monofluoroolefins, such as vinyl fluoride;
- 1,2-difluoroethylene, vinylidene fluoride and trifluoroethylene;
- perfluoroalkylethylenes complying with formula CH₂=CH-R_{f0}, in which R_{f0} is a C₁-C₆ perfluoroalkyl;
- chloro- and/or bromo- and/or iodo-C₂-C₆ fluoroolefins, like chlorotrifluoroethylene;
- fluoroalkylvinylethers complying with formula CF₂=CFOR_{f1} in which R_{f1} is a C₁-C₆ fluoro- or perfluoroalkyl, e.g. -CF₃, -C₂F₅, -C₃F₇;
- fluoro-oxyalkylvinylethers complying with formula CF₂=CFOX₀, in which X₀ is a a C₁-C₁₂ oxyalkyl, or a C₁-C₁₂ (per)fluorooxyalkyl having one or more ether groups, like perfluoro-2-propoxy-propyl;
- fluoroalkyl-methoxy-vinylethers complying with formula CF₂=CFOCF₂OR_{f2} in which R_{f2} is a C₁-C₆ fluoro- or perfluoroalkyl, e.g. -CF₃, -C₂F₅, -C₃F₇ or a C₁-C₆ (per)fluorooxyalkyl having one or more ether groups, like -C₂F₅-O-CF₃;
- fluorodioxoles, of formula : 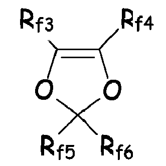
wherein each of R_{f3}, R_{f4}, R_{f5}, R_{f6}, equal or different each other, is independently a fluorine atom, a C₁-C₆ fluoro- or per(halo)fluoroalkyl, optionally comprising one or more oxygen atom, e.g. -CF₃, -C₂F₅, -C₃F₇, -OCF₃, -OCF₂CF₂OCF₃.

In a first embodiment of the invention, the polymer (F) is a hydrogen-containing fluoropolymer.

By "hydrogen-containing fluoropolymer" it is meant a fluoropolymer as above defined comprising recurring units derived from at least one hydrogen-containing monomer. Said hydrogen-containing monomer may be the same monomer as the fluorinated monomer or can be a different monomer.

Thus, this definition encompasses notably copolymers of one or more per(halo)fluoromonomer (for instance tetrafluoroethylene, chlorotrifluoroethylene, hexafluoropropylene, perfluoroalkylvinylethers, etc.) with one or more hydrogenated comonomer(s) (for instance ethylene, propylene, vinylethers, acrylic monomers, etc.), and/or homopolymers of hydrogen-containing fluorinated monomers (for instance vinylidene fluoride, trifluoroethylene, vinyl fluoride, etc.) and their copolymers with fluorinated and/or hydrogenated comonomers.

The hydrogen-containing fluoropolymer are preferably chosen among :
(F-1) TFE and/or CTFE copolymers with ethylene, propylene or isobutylene (preferably ethylene), with a molar ratio per(halo)fluoromonomer(s)/hydrogenated comonomer(s) of from 30:70 to 70:30, optionally containing one or more comonomers in amounts of from 0.1 to 30 % by moles, based on the total amount of TFE and/or CTFE and hydrogenated comonomer(s) (see for instance U.S. Pat. No. 3,624,250 and U.S. Pat. No. 4,513,129);
(F-2) Vinylidene fluoride (VdF) polymers, optionally comprising reduced amounts, generally comprised between 0.1 and 15 % by moles, of one or more fluorinated comonomer(s) (see for instance U.S. Pat. No. 4,524,194 and U.S. Pat. No. 4,739,024), and optionally further comprising one or more hydrogenated comonomer(s); and and mixtures thereof.

According to a second preferred embodiment of the invention; the polymer (F) is a per(halo)fluoropolymer.

For the purpose of the invention, the term "per(halo)fluoropolymer" is intended to denote a fluoropolymer substantially free of hydrogen atoms.

The term "substantially free of hydrogen atom" is understood to mean that the per(halo)fluoropolymer consists essentially of recurring units derived from ethylenically unsaturated monomers comprising at least one fluorine atom and free of hydrogen atoms (per(halo)fluoromonomer).

The per(halo)fluoropolymer can comprise recurring units comprising one or more other halogen atoms (Cl, Br, I).

The per(halo)fluoropolymer can be a homopolymer of a per(halo)fluoromonomer or a copolymer comprising recurring units derived from more than one per(halo)fluoromonomers.

Non limitative examples of suitable per(halo)fluoromonomers are notably :
- C₂-C₈ perfluoroolefins, such as tetrafluoroethylene (TFE) and
   hexafluoropropene (HFP);
- chloro- and/or bromo- and/or iodo- C₂-C₆ per(halo)fluoroolefins, like chlorotrifluoroethylene;
- per(halo)fluoroalkylvinylethers complying with general formula CF₂=CFOR_{f3} in which R_{f3} is a C₁-C₆ per(halo)fluoroalkyl, such as -CF₃, -C₂F₅, -C₃F₇;
- per(halo)fluoro-oxyalkylvinylethers complying with general formula CF₂=CFOX₀₁, in which X₀₁ is a C₁-C₁₂ per(halo)fluorooxyalkyl having one or more ether groups, like perfluoro-2-propoxy-propyl group;
- per(halo)fluoro-methoxy-alkylvinylethers complying with general formula CF₂=CFOCF₂OR_{f4} in which R_{f4} is a C₁-C₆ per(halo)fluoroalkyl, such as -CF₃,
- C₂F₅, -C₃F₇ or a C₁-C₆ per(halo)fluorooxyalkyl having one or more ether groups, such as -C₂F₅-O-CF₃;
- per(halo)fluorodioxoles of formula: 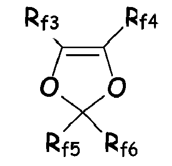
wherein each of R_{f3}, R_{f4}, R_{f5}, R_{f6}, equal of different each other, is independently a fluorine atom, a C₁-C₆ perfluoroalkyl group, optionally comprising one or more oxygen atom, e.g. -CF₃, -C₂F₅, -C₃F₇, -OCF₃, -OCF₂CF₂OCF₃; preferably a per(halo)fluorodioxole complying with formula here above, wherein R_{f3} and R_{f4} are fluorine atoms and R_{f5} and R_{f6} are perfluoromethyl groups (-CF₃), or a per(halo)fluorodioxole complying with formula here above, wherein R_{f3}, R_{f5} and R_{f6} are fluorine atoms and R_{f4} is a perfluoromethoxy group (-OCF₃).

Preferred per(halo)fluoropolymers are selected among TFE copolymers comprising recurring units derived from at least one fluorinated comonomer chosen among the group consisting of :
(i) perfluoroalkylvinylethers complying with formula CF₂=CFOR_{f1'}, in which R_{f1}, is a C₁-C₆ perfluoroalkyl, e.g. -CF₃, -C₂F₅, -C₃F₇; and/or
(ii) perfluoro-oxyalkylvinylethers complying with formula CF₂=CFOX₀, in which X₀ is a a C₁-C₁₂ perfluorooxyalkyl having one or more ether groups, like perfluoro-2-propoxy-propyl; and/or
(iii) C₃-C₈ perfluoroolefins, such as hexafluoropropylene.

More preferred per(halo)fluoropolymers are selected among TFE copolymers comprising recurring units derived from at least one fluorinated comonomer chosen among the group consisting of
(i) perfluoroalkylvinylethers, as above detailed;
(ii) perfluoro-oxyalkylvinylethers, as above detailed.

Good results have been obtained with TFE copolymers wherein the fluorinated comonomer is one or more than one perfluoroalkylvinylether as above specified; particularly good results have been achieved with TFE copolymers wherein the fluorinated comonomer is perfluoromethylvinylether (of formula CF₂=CFOCF₃), perfluoroethylvinylether (of formula CF₂=CFOC₂F5), perfluoropropylvinylether (of formula CF₂=CFOC₃F₇) and mixtures thereof.

Best results have been obtained with TFE copolymers wherein the fluorinated comonomer is perfluoromethylvinylether, a mixture of perfluoromethylvinylether and perfluoropropylvinylether, a mixture of perfluoroethylvinylether and perfluoropropylvinylether, or perfluoropropylvinylether.

The TFE copolymers as above detailed comprise advantageously at least 2 % wt, preferably at least 5 % wt, more preferably at least 7 % wt of recurring units derived from at least one fluorinated comonomer.

The TFE copolymers as above detailed comprise advantageously at most 30 % wt, preferably at most 25 % wt, more preferably at least 20 % wt of recurring units derived from at least one fluorinated comonomer.

Good results have been obtained with TFE copolymers as above detailed comprising at least 2 % wt and at most 30 % wt of recurring units derived from the fluorinated comonomer.

MFA copolymers (TFE copolymers comprising recurring units derived from perfluoromethylvinylether) and PFA copolymers (TFE copolymers comprising recurring units derived from perfluoropropylvinylether) suitable to be used for the composition of the invention are commercially available from Solvay Solexis S.pA. under the trade name of HYFLON^{®} PFA and MFA.

Within the context of the present invention the mention "at least one functional fluoropolymer (I)" is intended to denote one or more than one polymer (I). Mixtures of polymers (I) can be advantageously used for the purposes of the invention.

In the rest of the text, the expressions "functional fluoropolymer" and "polymer (I)" are understood, for the purposes of the present invention, both in the plural and the singular, that is to say that the inventive composition may comprise one or more than one polymer (I).

To the purpose of the present invention, the term "functional fluoropolymer" is intended to denote any polymer comprising :
- recurring units derived from at least one ethylenically unsaturated monomer comprising at least one fluorine atom (fluorinated monomer, as above defined); and
- a substantial amount of recurring units derived from at least one ethylenically unsaturated monomer comprising at least one functional group comprising at least one heteroatom other than fluorine (functional monomer, hereinafter).

The term "substantial amount" in the definition here above is intended to denote an amount of recurring units derived from the functional monomer which is effective to modify the polymer in its properties. Generally, a substantial amount is of at least 1 % by moles, based on the total moles of recurring units.

As used herein, the term "functional group" has its general meaning as intended in organic chemistry and it encompasses atoms or combination of atoms bonded to the carbon skeleton of the ethylenically unsaturated monomer, which confers to said ethylenically unsaturated monomer specific reactivity and chemical properties.

Non limitative examples of functional groups are notably those complying with formula :
■ -SO₂X, wherein X is chosen among H, halogens (Cl, Fl, Br, I), -O⁻M⁺, wherein M⁺ is a cation selected among H⁺, NH₄⁺, K⁺, Li⁺, Na⁺, or mixtures thereof; preferably X is fluorine.
■ -COY, wherein Y is chosen among H, halogens (Cl, Fl, Br, I), -O⁻M⁺, wherein M⁺ is a cation selected among H⁺, NH₄⁺, K⁺, Li⁺, Na⁺, -OR_{Hy} wherein R_{Hy} is a C₁-C₆ hydrocarbon group, -OR_{Hf} wherein R_{Hf} is a C₁-C₆ fluorocarbon or per(halo)fluorocarbon group, -N(R_{Hy*})₂, wherein R_{Hy*}, equal or different at each occurrence, is hydrogen or a C₁-C₆ hydrocarbon group, or mixtures thereof.
■ -PO₂Z, wherein Z is chosen among H, halogens (Cl, Fl, Br, I), -O-M⁺, wherein M⁺ is a cation selected among H⁺, NH₄⁺, K⁺, Li⁺, Na⁺, -OR_{Hy} wherein R_{Hy} is a C₁-C₆ hydrocarbon group, and -OR_{Hf'} wherein R_{Hf} is a C₁-C₆ fluorocarbon or per(halo)fluorocarbon group, or mixture thereof.

Should the functional monomer comprise [in addition to fluorine atoms optionally comprised in the functional group] at least one fluorine atom which is not comprised in the functional group, it is designated as fluorinated functional monomer. Should the functional monomer be free of fluorine atoms other than those optionally comprised in the functional group, it is designated as hydrogenated functional monomer.

The fluorinated monomer and the fluorinated functional monomer may be the same monomer or may be different monomers, that is to say that the functional fluoropolymer can be a homopolymer of a fluorinated functional monomer, or can be a copolymer of one or more than one fluorinated monomer and one or more than one functional monomer, fluorinated or hydrogenated.

Polymer (I) comprises advantageously at least 1 %, preferably at least 2 %, more preferably at least 3 %, even more preferably at least 5 %, by mole of recurring units derived from the functional monomer, based on the total moles of recurring units.

Polymer (I) comprise advantageously at most 75 %, preferably at most 50 %, more preferably at most 30 %, even more preferably at most 20 % by moles of recurring units derived from the functional monomer, based on the total moles of recurring units.

Preferably, the polymer (I) comprises recurring units derived from at least one fluorinated functional monomer chosen among :
(M1) sulfonated perfluoroolefin of formula (M1): 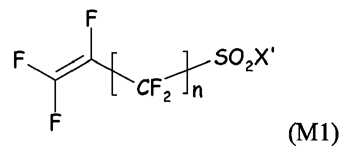 wherein n is an integer between 0 and 6 and X' is chosen among H, halogens (Cl, Fl, Br, I), -O⁻M⁺, wherein M⁺ is a cation selected among H⁺, NH₄⁺, K⁺, Li⁺, Na⁺, or mixtures thereof; preferably X' is fluorine; preferred sulfonated fluoroolefin are those complying with formulae (M1-A) and (M1-B) : 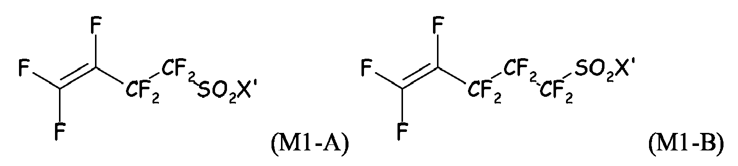 wherein X' has the same meaning as above defined;
(M2) sulfonated perfluorovinylethers of formula (M2) : 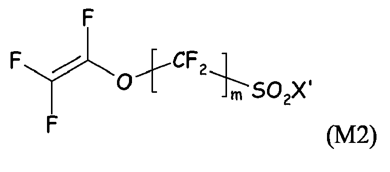 wherein m is an integer between 1 and 6 and X' is chosen among H, halogens (Cl, Fl, Br, I), -O⁻M⁺, wherein M⁺ is a cation selected among H⁺, NH₄⁺, K⁺, Li⁺, Na⁺, or mixtures thereof; preferably X' is fluorine; preferred are sulfonated perfluoroethers of formulae (M2-A) and (M2-B) : 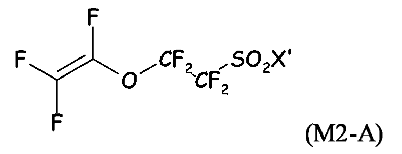 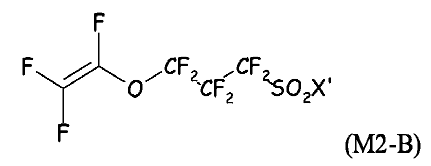 wherein X' has the same meaning as above defined; most preferably, the sulfonated perfluorovinylether is
   perfuoro-5-sulphonylfluoride-3-oxa-1-pentene (also known as "SFVE") of formula (M2-C) : 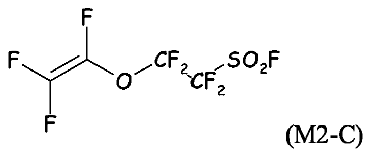
(M3) sulfonated perfluoroalkoxyvinylethers of formula (M3) : 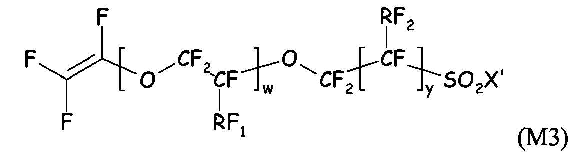 wherein w is an integer between 0 and 2, RF₁ and RF₂, equal or different at each occurrence, are independently -F, -Cl or a C₁₋₁₀ perfluoroalkyl group, optionally substituted with one or more ether oxygens, y is an integer between 0 and 6 and X' is chosen among H, halogens (Cl, Fl, Br, I), -O-M⁺, wherein M⁺ is a cation selected among H⁺, NH₄⁺, K⁺, Li⁺, Na⁺, or mixtures thereof; preferably X' is fluorine; preferred sulfonated perfluoroalkoxyvinylether complies with formula (M3) here above, wherein w is 1, RF₁ is -CF₃, y is 1 and RF₂ is -F and X' is F [formula (M3-A), also called "PSEPVE"
   (perfluoro-2-(2-fluorosulfonylethoxy)propylvinyl ether)] : 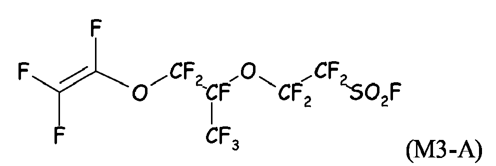
(M4) perfluoroalkoxyvinylether carboxylates of formula (M4) : 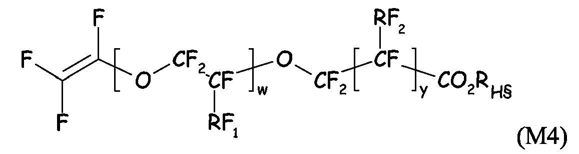 wherein w, y, RF₁ and RF₂ have the same meaning as above defined, and R_{H§} is a C₁₋₁₀ alkyl or fluoroalkyl group; preferred perfluoroalkoxyvinylether carboxylate complies with formula (M4) here above, wherein w is 0, y is 2 and RF₂ is -F [formula (M4-A)] : 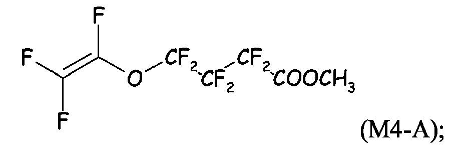
(M5) sulfonated aromatic (per)fluoroolefins of formula : 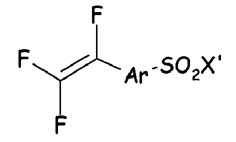 wherein Ar is a C₃₋₁₅ aromatic or heteroaromatic moiety and X' is chosen among H, halogens (Cl, Fl, Br, I), -O⁻M⁺, wherein M⁺ is a cation selected among H⁺, NH₄⁺, K⁺, Li⁺, Na⁺, or mixtures thereof; preferably X' is fluorine;
   and
(M6) mixtures thereof.

Optionally, in addition to recurring units derived from fluorinated monomer(s) and functional fluorinated monomer(s) as above specified, the polymer (I) can further comprise recurring units derived from bis-olefins of formula : 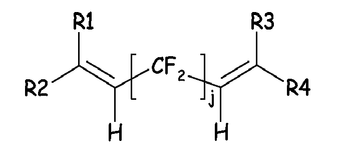 wherein j is an integer between 2 and 10, preferably between 4 and 8, and R, R2, R3, R4, equal or different each other, are H or C₁₋₅ alkyl or fluoroalkyl groups.

Should the polymer (I) comprise recurring units derived from a bis-olefin as above define, it advantageously comprises said recurring units in an amount in the range from 0.01 to 5 % by moles, with respect to all recurring units of polymer (I).

The polymer (I) is preferably a functional per(halo)fluoropolymer.

For the purpose of the invention, the term "functional per(halo)fluoropolymer" is intended to denote a functional fluoropolymer substantially free of hydrogen atoms.

The term "substantially free of hydrogen atom" is understood to mean that the functional per(halo)fluoropolymer consists essentially of :
- recurring units derived from one or more than one ethylenically unsaturated monomer comprising at least one fluorine atom and free from hydrogen atoms (per(halo)fluoromonomer, hereinafter); and
- recurring units derived from one or more than one ethylenically unsaturated monomer comprising at least one fluorine atom and free from hydrogen atoms and comprising at least one functional group comprising at least one heteroatom other than fluorine (functional per(halo)fluoromonomer, hereinafter).

The per(halo)fluoromonomer and the functional per(halo)fluoromonomer may be the same monomer or may be different monomers, that is to say that the functional per(halo)fluoropolymer can be a homopolymer of a functional per(halo)fluoromonomer, or can be a copolymer of one or more than one per(halo)fluoromonomer and one or more than one functional per(halo)fluoromonomer.

Preferred polymers (I) are functional per(halo)fluoropolymers comprising recurring units derived from at least one functional per(halo)fluoromonomer and at least one per(halo)fluoromonomer chosen among :
- C₃-C₈ perfluoroolefins, preferably tetrafluoroethylene (TFE) and/or hexafluoropropylene (HFP);
- chloro- and/or bromo- and/or iodo-C₂-C₆ per(halo)fluoroolefins, like chlorotrifluoroethylene (CTFE) and/or bromotrifluoroethylene;
- perfluoroalkylvinylethers (PAVE) complying with formula CF₂=CFOR_{f1} in which R_{f1} is a C₁-C₆ perfluoroalkyl, e.g. -CF₃, -C₂F₅, -C₃F₇ ;
- perfluoro-oxyalkylvinylethers complying with formula CF₂=CFOX₀, in which X₀ is a C₁-C₁₂ perfluorooxyalkyl having one or more ether groups, like perfluoro-2-propoxy-propyl.

More preferred polymers (I) are TFE copolymers comprising recurring units derived from at least one functional per(halo)fluoromonomer as above defined.

Preferred functional per(halo)fluoromonomer are notably sulfonated perfluorovinylethers of formula (M2) as above detailed and sulfonated perfluoroalkoxyvinylethers of formula (M3) as above detailed, and mixtures thereof.

Even more preferred polymers (I) are selected among TFE copolymers comprising recurring units derived from PSEPVE and/or SFVE, in their -SO₂F or -SO₂X" form, wherein X" is chosen among H, halogens (Cl, Br, I), -O⁻M⁺, wherein M⁺ is a cation selected among H⁺, NH₄⁺, K⁺, Li⁺, Na⁺, or mixtures thereof; preferably in their -SO₂F form.

Still more preferred polymers (I) are selected among TFE copolymers comprising :
- from 5 to 20 % by moles of recurring units derived from PSEVE and/or SFVE, in their -SO₂F or -SO₂X" form, wherein X" is chosen among H, halogens (Cl, Fl, Br, I), -O⁻M⁺, wherein M⁺ is a cation selected among H⁺, NH₄⁺, K⁺, Li⁺, Na⁺, or mixtures thereof; preferably X" is fluorine; and
- from 95 to 80 % by moles of recurring units derived from TFE.

Most preferred polymers (I) are TFE copolymers as above described wherein the functional monomer is SFVE, in its -SO₂F or -SO₂X" form, wherein X" is chosen among H, halogens (Cl, Br, I), -O⁻M⁺, wherein M is a cation selected among H⁺, NH₄⁺, K⁺, Li⁺, Na⁺, or mixtures thereof; preferably in its -SO₂F form.

A first object of the invention is a multilayer polymer structure [structure (S)] comprising a layer (α) comprising at least one polyamide [polymer (A)], said layer (α) being linked to a layer (γ) comprising at least one melt-processible fluoropolymer substantially free from recurring units derived from functional monomers [polymer (F)] via a layer (β), said layer (β) consisting of a polymer composition (C-1), said polymer composition (C-1) comprising from 100 % to 3 % by weight of at least one functional fluoropolymer [polymer (I)], with respect to the total weight of the composition, and from 0 to 97 % by weight of at least one melt-processible fluoropolymer substantially free from recurring units derived from functional monomers [polymer (F)], with respect to the total weight of the composition.

The expression "multilayer polymer structures comprising a layer (α), as above described, linked to a layer (γ)" as above described, is intended to denote multilayer polymer structures containing at least one layer (α) linked to at least one layer (γ). The multilayer polymer structures according to the invention may thus contain one or more layers (α) linked to one or more layers (γ), these layers themselves possibly being linked to layers of other polymers, of metal and/or of fabric.

The multilayer polymer structures according to the invention however preferably contain only one layer (α) as above described linked via layer (β) to only one layer (γ) as above described.

The multilayer polymer structures according to the invention may be used advantageously in fields of application that require good impermeability to liquids and gases, combined with high chemical inertness. As non-limiting practical examples of uses of the multilayer polymer structures according to the invention, mention may be made of pipes for conveying fuel, corrosive products or ultra-pure waters; tubes for conveying gases; films for protecting against the corrosion of motor vehicle bodywork parts; composite plaques, sheets and films for uses in the construction and agricultural industries; packaging bottles; liquid storage tanks and fuel tanks.

The thickness of the layers constituting the multilayer polymer structure according to the invention and the total thickness of the said structure are not critical and obviously depend on the use for which they are intended.

The thickness of the layer (α) or of layer (γ) may be between 50 µm and 600 µm. The thickness of the layer (β) may be between 30 µm 1 000 µm, preferably between 50 µm and 400 µm.

The polymer composition (C-1) comprised in layer (β) of the structure (S) comprises from 100 to 3 % by weight of at least one functional fluoropolymer [polymer (I)], with respect to the total weight of the composition.

Said polymer composition (C-1) comprises at least 3 %, preferably at least 4 %, more preferably at least 5 % by weight of functional fluoropolymer (I), with respect to the total weight of the composition.

Said polymer composition (C-1) comprises at most 100 %, preferably less than 97 %, more preferably less than 75 %, still more preferably less than 60 % by weight of functional fluoropolymer (I), with respect to the total weight of the composition.

The polymer composition (C-1) comprised in layer (β) of the structure (S) comprises from 0 to 97 % by weight of at least one melt-processible fluoropolymer substantially free from recurring units derived from functional monomers [polymer (F)], with respect to the total weight of the composition.

Should said polymer composition (C-1) comprise a polymer (F), it comprises advantageously at least 3 %, preferably at least 25 %, more preferably at least 40 % by weight of polymer (F), with respect to the total weight of the composition.

Should said polymer composition (C-1) comprise a polymer (F), it comprises advantageously at most 97 %, preferably at most 96 %, more preferably at most 95 % by weight of polymer (F), with respect to the total weight of the composition.

Should the composition (C-1) comprise a polymer (F), said polymer (F) can be the same polymer (F) as that of layer (γ) or can be a polymer (F) different from polymer (F) of layer (γ). Preferably, the same fluoropolymer (F) is used both in the layer (γ) and in the polymer composition (C-1) of layer (β).

According to a first embodiment of the invention, the composition (C-1) does not comprise any thermoplastic material other than polymer (I) and polymer (F). Preferably, composition (C-1) according to this first embodiment consists essentially of from 100 to 3 % by weight of polymer (I) and from 0 to 97 % by weight of polymer (F), with respect to the total weight of the composition.

According to a second embodiment of the invention, the polymer composition (C-1) further comprises at least one polyamide [polymer (A)] as above defined.

The polymer composition according to this second embodiment of the invention comprises advantageously at least 0.5 %, preferably at least 1 %, more preferably at least 3 %, even more preferably at least 5 % by weight of polymer (A) with respect to the total weight of the composition.

The polymer composition according to this second embodiment of the invention comprises advantageously less than 30 %, preferably less than 25 %, more preferably less than 20 % wt of polymer (A) with respect to the total weight of the composition.

Layer (α) and/or layer (γ) can further comprise other additives and/or polymers that are useful in combination with the polymer (A) and/or with the polymer (F).

Layer (α) comprises advantageously at least 50 %, preferably at least 55 % more preferably at least 60 % of polymer (A) with respect to the total weight of layer (α).

Layer (γ) comprises advantageously at least 50 %, preferably at least 55 % more preferably at least 60 % of polymer (F) with respect to the total weight of layer (γ).

Preferably polymer (F) is the unique melt-processible polymer of layer (γ).

According to a preferred embodiment of the invention layer (α) can further comprise an impact modifier (I1).

Impact modifier (I1) can be elastomeric or not. Suitable impact modifiers are not particularly limited, so long as they impart useful mechanical properties to polymer (A), such as sufficient tensile elongation at yield and break. Advantageously, impact modifier (I1) further improves the processability of polymer (A), notably its aptitude to be co-extruded.

Impact modifier (I1) is preferably elastomeric.

Examples of elastomeric impact modifiers are ethylene (Ee) / 1-octene (1Oe) copolymers, propylene (Pe) / 1Oe copolymers, Ee /Pe / 1Oe terpolymers, Ee / 1-butene (1Be) /1Oe terpolymers, Pe /1Be /10e terpolymers, Ee /10e / 1-pentene terpolymers, Ee / 10e / styrene terpolymers, Ee / 10e / acrylonitrile terpolymers, Ee / 10e / methylacrylate terpolymers, Ee / 1Oe / vinyl acetate terpolymers, Ee / 10e / methyl methacrylate terpolymers, Pe / 10e / styrene terpolymers, Pe / 10e / acrylonitrile terpolymers, Pe / 10e / methylacrylate terpolymers, Pe / 10e / vinyl acetate terpolymers, Pe / 10e / methyl methacrylate terpolymers, Ee / 1Oe / 1,4-hexadiene terpolymers, Pe / 10e / 1,4-hexadiene terpolymers, Ee / 10e / ethylidenenorbomene terpolymers, Pe / 1Oe / ethylidenenorbomene terpolymers, Ee / Pe copolymers (commonly known as "EPR rubbers"), chlorosulphonated Ee polymers ("PE rubber"), Ee / Pe / diene terpolymers ("EPDM rubbers") like for example Ee / Pe / 1,4-hexadiene terpolymers and Ee / Pe / ethylidene norbornene terpolymers, butadiene rubbers (cis-1,4-poly-butadiene), butyl rubbers like isobutylene-isoprene rubber, nitrile butadiene rubbers, styrene-butadiene rubbers, styrene-Ee-butadiene-styrene rubbers where butadiene may be hydrogenated or not, Ee-acrylic cross-linked rubbers (copolymers of ethylene with methyl methacrylate), natural rubber (cis-1,4-polyisoprene), chloroprene rubbers or neoprene (trans-1,4-polychloroprene), polyethers like epichlorohydrin elastomers and propylene oxide elastomers, polypentenamers such as polycyclopentene, thermoplastic urethane elastomers and mixtures thereof.

Impact modifier (I1) is more preferably an elastomer obtained by copolymerizing Ee with at least one higher alpha-olefin, and optionally in addition at least one diene.

Impact modifier (I1) is still more preferably chosen from elastomeric Ee / 1Oe copolymers, EPR rubbers, EPDM rubbers, and mixtures thereof.

Good results were obtained when impact modifier (I1) was an EPDM rubber.

Impact modifier (I1) may be grafted (GI1) or not (UGI1). All the above cited impact modifiers should herein be considered as specifically disclosed both in their grafted and in their ungrafted form.

When impact modifier (I1) consists of one compound, it is preferably grafted. When impact modifier (I1) consists of a plurality of compounds, preferably at least one of them is grafted.

Grafted impact modifier (GI1) is usually obtained by grafting at least one grafting agent (G1) onto an ungrafted impact modifier (UGI1).

Grafting agent (G1) is advantageously chosen from ethylenically unsaturated carboxylic acids, their esters, their anhydrides and their salts.

Grafting agent (G1) is preferably chosen from compounds with at most two carboxylic groups. More preferably, grafting agent (G1) further comprises from 3 to 20 carbon atoms, like acrylic acid, methacrylic acid, maleic acid, fumaric acid, itaconic acid, crotonic acid, citraconic acid, maleic anhydride, succinic anhydride, itaconic anhydride, crotonic anhydride, citraconic anhydride and mixtures thereof. Still more preferably, grafting agent (G1) is chosen from maleic anhydride, succinic anhydride, acrylic acid, methacrylic acid, maleic acid, succinic acid and mixtures thereof. The most preferably, grafting agent (G1) is maleic anhydride.

When ethylenically unsaturated carboxylic acids and/or their anhydrides are grafted onto an ungrafted impact modifier, the resulting grafted carboxylic acids and/or anhydride groups can be left unchanged; the case being, the grafted impact modifier (GI1) is one with grafted carboxylic acid and/or anhydride groups. They can also be subsequently reacted, in particular they can be partially or completely neutralized by one or more metallic neutralizing agents ; the case being, grafted impact modifier (GI1) is one with partially or completely neutralized grafted carboxylic acid and/or anhydride groups.

The weight amount of grafting agent (G1), based on the total weight of grafted impact modifier (GI1), is advantageously of at least 0.01 wt %, preferably of at least 0.01 wt % and more preferably of at least 0.05 wt %. In addition, it is advantageously of at most 5.0 wt %, preferably of at most 1.0 wt % and more preferably of at most 0.5 wt %.

The grafting of grafting agent (G1) may be accomplished by techniques known in the art.

Commercially available grafted elastomeric polyolefins are, for example, maleated Ee-Pe copolymers such as EXXELOR^{®} VA 1801 from the Exxon Mobil Chemical Company, EXXELOR^{®} MDEX 94-11-2 from the Exxon Mobil Chemical Company, maleated Ee-Pe-diene terpolymers such as ROYALTUF^{®} 498 available from the Chemtura Corporation and maleated Ee-1Oe copolymers such as FUSABOND^{®} 493D available from the Du Pont Company. Other commercially available grafted elastomers are acrylic or acrylate-modified polyethylene rubbers such as SURLYN^{®} 9920 available from the DuPont Company and maleic anhydride-modified styrene-Ee-butylene-styrene block copolymer such as KRATON^{®} FG1901X available from Kraton Polymers.

The amount of impact modifier (I1) is advantageously sufficient to impart notably desirable mechanical characteristics (e.g. tensile elongation at yield and break) and processability to polymer (A).

Preferably, the weight amount of the impact modifier (I1), based on the total weight of polymer (A) and impact modifier (I1), is of less than 50 %, more preferably of less than 35 %, and still more preferably of less than 30 % by weight. In addition, it is preferably of at least 1 %, more preferably of at least 5 %, still more preferably of at least 10 %, and the most preferably of at least 20 % by weight, based on the total weight of polymer (A) and impact modifier (I1).

Still an object of the invention is a process for manufacturing the multilayer polymer structure [structure (S)] as above detailed.

Use may be made of any usual techniques for assembling polymer layers to prepare the multilayer polymer structure according to the invention. An example of such techniques that may be mentioned includes thermal bonding involving a solution of the layer (β) based on a polymer adhesive in a solvent or a mixture of solvents. Other common and suitable techniques for assembling polymer layers to prepare the multilayer polymer structures according to the invention include those in which the constituent polymers are used at a temperature at least equal to their softening point. Preferably, the preparation of the multilayer polymer structures according to the invention is performed by colaminating, coextrusion, for example coextrusion-laminating, coextrusion-blow moulding and coextrusion-moulding, extrusion-coating, coating, overinjection-moulding or coinjection-moulding.

The process for preparing the multilayer polymer structure according to the invention is performed in a particularly preferred manner by colaminating, coextrusion or overinjection-moulding.

The choice of one or other of these assembly techniques is made on the basis of the use for which the multilayer polymer structures are intended. For example, pipes, tubes, films, sheets and plaques are preferably assembled by coextrusion.

The invention also pertains to a shaped article comprising the structure (S) as above defined.

Preferably the shape article is a tube. More preferably the shape article is a coextruded tube.

Such tubes inherently are hollow, like soda straws, and generally have an aspect ratio, defined as the ratio of length to outside diameter. Preferred aspect ratios range from, e.g., 0.1 to 100 and greater. Inside diameter can vary as desired, and wall thicknesses can similarly be varied in known ways.

Still an object of the invention is a multilayer tube [tube (T-1)] comprising a layer (α) comprising at least one polyamide [polymer (A)] and a layer (β) comprising a polymer composition (C-1) as above described.

Such tubes inherently are hollow, like soda straws, and generally have an aspect ratio, defined as the ratio of length to outside diameter. Preferred aspect ratios range from, e.g., 0.1 to 100 and greater. Inside diameter can vary as desired, and wall thicknesses can similarly be varied in known ways.

Features of layer (α) and layer (β) are those above detailed for the structure (S).

Preferably, in tube (T-1), layer (α') and layer (β') are bonded together, typically with no adhesive nor tie-layer.

Still another object of the invention is a multilayer tube [tube (T-2)] comprising a layer (γ) comprising at least one melt-processible fluoropolymer substantial free from recurring units derived from functional monomers [polymer (F)] and a layer (δ) comprising a polymer composition (C-2), said composition comprising from 100 % to 3 % by weight of at least one functional fluoropolymer [polymer (I)] with respect to the total weight of the composition and from 0 to 97 % by weight of at least one polyamide [polymer (A)] with respect to the total weight of the composition.

Such tubes inherently are hollow, like soda straws, and generally have an aspect ratio, defined as the ratio of length to outside diameter. Preferred aspect ratio range from, e.g., 0.1 to 100 and greater. Inner diameter can vary as desired, and wall thickness can similarly be varied in known ways.

Layer (α), polymer (F), polymer (I) and polymer (A) are those above detailed.

Polymer composition (C-2) comprised in layer (β") of tube (T-2) comprises at least 3 %, preferably at least 4 %, more preferably at least 5 % by weight of functional fluoropolymer (I), with respect to the total weight of the composition.

Polymer composition (C-2) comprised in layer (δ) of tube (T-2) comprises at most 100 %, advantageously at most 97 %, preferably at most 75 %, more preferably at most 60 % by weight of functional fluoropolymer (I), with respect to the total weight of the composition.

Preferably, in tube (T-2) layer (γ) and layer (δ) are bonded together, typically with no-adhesive nor tie-layer.

According to an embodiment of the invention, polymer composition (C-2) further comprises at least one polymer (F) as above defined.

The polymer composition according to this embodiment of the invention comprises advantageously at least 0.5 %, preferably at least 1 %, more preferably at least 3 %, even more preferably at least 5 % by weight of polymer (F) with respect to the total weight of the composition.

The polymer composition according to this embodiment of the invention comprises advantageously less than 30 %, preferably less than 25 %, more preferably less than 20 % wt of polymer (F) with respect to the total weight of the composition.

Finally, the invention relates to a polymer composition (C-3) useful for bonding polymer (F) and polymer (A) interfaces, said composition (C-3) comprising :
(c1) at least one polyamide [polymer (A)];
(c2) at least one functional fluoropolymer [polymer (I)]
(c3) optionally, at least one impact modifier (I-1).

Polymer (A), polymer (I) and impact modifier (I-1) are those above specified.

Polymer composition (C-3) comprises advantageously at least 3 %, preferably at least 4 %, more preferably at least 5 % by weight of functional fluoropolymer (I), with respect to the total weight of the composition.

Polymer composition (C-3) comprises advantageously less than 50 %, preferably less than 30 %, more preferably less than 25 % by weight of functional fluoropolymer (I), with respect to the total weight of the composition.

Advantageously, polymer (A) is the major polymer component of polymer composition (C-3), that is to say that the weight amount of polymer (A) exceeds weight amount of each of the other polymer components.

Polymer composition (C-3) comprises advantageously at least 50 %, preferably at least 45 %, more preferably at least 40 % by weight of polymer (A), with respect to the total weight of the composition.

Should the polymer composition (C-3) further comprise an impact modifier (I-1), the amount of impact modifier (I1) is advantageously sufficient to impart notably desirable mechanical characteristics (e.g. tensile elongation at yield and break) and processability to polymer (A).

Preferably, the weight amount of the impact modifier (I1), based on the total weight of polymer (A) and impact modifier (I1), is of less than 50 %, more preferably of less than 35 %, and still more preferably of less than 30 % by weight. In addition, it is preferably of at least 1 %, more preferably of at least 5 %, still more preferably of at least 10 %, and the most preferably of at least 20 % by weight, based on the total weight of polymer (A) and impact modifier (I1).

According to an embodiment of the invention, polymer composition (C-3) comprises a melt-processible fluoropolymer substantially free from recurring units derived from functional monomers [polymer (F)], whose features are detailed here above.

The polymer composition (C-3) according to this embodiment comprises advantageously at least 3 %, preferably at least 4 %, more preferably at least 5 % by weight of melt-processible fluoropolymer (F), with respect to the total weight of the composition.

The polymer composition (C-3) according to this embodiment comprises advantageously less than 50 %, preferably less than 30 %, more preferably less than 25 % by weight of melt-processible fluoropolymer (F), with respect to the total weight of the composition.

The polymer composition (C-3) of the invention may be extruded, co-extruded, injection molded, blow molded, cast, thermoformed, etc. The invention polymer composition (C-3) may be advantageously used for manufacturing shaped articles, in particular shaped articles comprising multiple polymeric layers. In particular, the invention polymer composition (C-3) may be used for manufacturing hoses, pipes, tubings, films, filaments, fibers, tanks, blow molded articles, injection molded articles, thermoformed articles, multi-layer structures, sheets etc.

It is understood that each of the layers constituting the multilayer polymer structure (S), the tube (T-1) and/or (T-2), and each of the compositions (C-1), (C-2) and (C-3) according to the invention may contain the usual additives used during the manufacture or implementation of the polymers comprised therein.

Useful additives include, for example, an external lubricant, such as a metallic stearate, polytetrafluoroethylene (PTFE) or low density polyethylene (LDPE), to facilitate extrusion. Suitable powdered PTFE include POLYMIST^{®} F5A available from Solvay Solexis.

A possibly useful additive is a pigment and/or a dye, including, for example, carbon black (e.g. VULCAN^{®} Black available from the Cabot Corporation), nigrosine dye, and mixtures thereof. Carbon-based materials may optionally be conductive.

Another possibly useful additive is a heat stabilizer. Suitable heat stabilizers advantageously include copper-containing stabilizers comprising a copper compound soluble in the polyamide and an alkali metal halide. More particularly, in certain embodiments the stabilizer advantageously comprises a copper (I) salt, for example cuprous acetate, cuprous stearate, a cuprous organic complex compound such as copper acetylacetonate, a cuprous halide or the like, and an alkali metal halide. In certain embodiments of the present invention, the stabilizer comprises a copper halide selected from copper iodide and copper bromide and an alkali metal halide selected from the iodides and bromides of lithium, sodium, and potassium. Formulations comprising copper (I) halide, an alkali metal halide and a phosphorus compound can also be employed to improve the stability of hollow bodies formed from polyphthalamide compositions during extended exposure to temperatures up to about 140 °C. The amount of the stabilizer used is preferably that amount sufficient to provide a level of from about 50 ppm to about 1000 ppm copper. Preferred compositions of the invention comprise an alkali metal halide and copper (I) halide at a weight ratio advantageously the range of from about 2.5 to about 10, and most preferably from about 8 to about 10. Generally, the combined weight of copper and alkali metal halide compound in a stabilized invention aromatic polyamide composition ranges from about 0.01 wt. % to about 2.5 wt. %.

A particularly suitable stabilizer for compositions according to the present invention comprises pellets of a 10/1 by weight mixture of potassium iodide and cuprous iodide with a magnesium stearate binder. Said potassium iodide/cuprous iodide heat stabilizer advantageously provides protection against long term heat aging, such as exposure to under-the-hood automobile temperatures.

Another possibly useful additive is a filler such as a reinforcing filler, or structural fiber. Structural fibers useful in forming filled articles and composite products include glass fiber, carbon or graphite fibers and fibers formed of silicon carbide, alumina, titania, boron and the like, as well as fibers formed from high temperature engineering resins such as, for example, poly(benzothiazole), poly(benzimidazole), polyarylates, poly(benzoxazole), aromatic polyamides, polyaryl ethers and the like, and may include mixtures comprising two or more such fibers. Suitable fibers possibly useful herein include glass fibers, carbon fibers and aromatic polyamide fibers such as the fibers sold by the DuPont Company under the trade name KEVLAR^{®}. Fillers present in the invention polymer composition, if any, may increase the flexural modulus, for example, in blow molding applications. The amount of fibers is preferably an amount that does not decrease the melt strength of the polymer composition or detrimentally affect surface finish.

Another possibly useful additive is an antioxidant. Useful antioxidants include Nauguard 445, sterically hindered phenols (such as for instance IRGANOX^{®} 1010, IRGANOX^{®} 1098 from Ciba), phosphites, phosphonites (e.g., IRGAFOS^{®} 168 from Ciba, P-EPQ^{®} from Clariant or Ciba), thiosynergists (e.g., LOWINOX^{®} DSTDP from Great Lakes), hindered amine stabilizers (e.g., CHIMASSORB^{®} 944 from Ciba), hydroxyl amines, benzofuranone derivatives, acryloyl modified phenols, etc.

Other fillers which may also be used in compositions according to the invention include antistatic additives such as carbon powders, multi-walled carbon nanotubes and single walled nanotubes as well as flake, spherical and fibrous particulate filler reinforcements and nucleating agents such as talc, mica, titanium dioxide, potassium titanate, silica, kaolin, chalk, alumina, mineral fillers, and the like. The fillers and structural fiber may be used alone or in any combination.

Above mentioned additives or others may be employed alone or in any combination, as needed. For particular applications, it may also be useful to include plasticizers, lubricants, and mold release agents, as well as thermal, oxidative and light stabilizers, and the like. The levels of such additives can be determined for the particular use envisioned by one of ordinary skill in the art in view of this disclosure.

The present invention will be now described in more details by reference to the following examples, whose purpose are merely illustrative and do not limit the scope of the present invention.

### EXAMPLES

### Raw materials

The following materials have been used in the examples detailed here below

Polyamide (1) is a compound comprising :
- 74.25 % wt of AMODEL^{®} A-5000 poly(tere/iso)phthalamide (a polymer consisting of recurring units derived from polycondensation reaction between 50 % mol of terephthalic acid; 5 % mol of isophthalic acid and 45 % mol of adipic acid with hexamethylenediamine), having a melting point of 295°C, commercially available from Solvay Advanced Polymers, L.L.C.,
- 25 % wt of ROYALTUF^{®} 498 maleic anhydride grafted EPDM commercially available from Chemtura Corporation;
- 0.25 % wt of POLYMIST^{®} F5A micronized PTFE commercially available from Solvay Solexis S.p.A.;
- 0.5 % wt of IRGANOX^{®} 1098 sterically hindered phenol from CIBA (0.5 % wt);
and further comprising a carbon black concentrate (VULCAN^{®}) commercially available from Cabot Corporation in an amount of 2 parts per hundred parts of compound.

Polyamide (2) is a compound comprising :
- 72 % wt of AMODEL^{®} A-1004 polyterephthalamide (a polymer consisting of recurring units derived from polycondensation reaction between 65 % mol of terephthalic acid, 25 % mol of isophthalic acid and 10 % mol of adipic acid with hexamethylenediamine), having a melting point of 315°C commercially available from Solvay Advanced Polymers, L.L.C.,
- 25 % wt of EXXELOR^{®} MDEX-94-11-2 EPDM/ethylene-octene copolymer grafted with maleic anhydride commercially available from ExxonMobil Chemical Company;
- 0.5 % wt of POLYMIST^{®} F5A micronized PTFE commercially available from Solvay Solexis S.p.A.;
- 0.5 % wt of IRGANOX^{®} 1098 sterically hindered phenol from CIBA (0.5 % wt);
- 2 % wt of carbon black concentrate VULCAN^{®} commercially available from Cabot Corporation.

Fluoropolymer (1) is TEFZEL^{®} ETFE 200, commercially available from DuPont de Nemours.

Fluoropolymer (2) is TEFLON^{®} FEP 100, commercially available from DuPont de Nemours.

Fluoropolymer (3) is a FEP having a MFI (270°C; 5 kg) of 3.2 g/10 min and a melting point of 265°C.

Fluoropolymer (4) is HYFLON^{®} MFA 640, commercially available from Solvay Solexis S.p.A..

Ionomer (1) is a TFE/perfluoro-5-sulphonylfluoride-3-oxa-1-pentene (SFVE) copolymer, comprising 15 % by moles of SFVE, having an equivalent weight of 850, a melting point of 240°C and an MFI (280°C; 5 kg) of 8.3 g/10 min.

Blend (A) is a composition prepared by melt compounding in an extruder at a temperature profile in the range 330-360°C a mixture of 97 parts by weight of fluoropolymer (4) and 3 parts by weight of ionomer (1).

Blend (B) is a composition prepared by melt compounding in an extruder at a temperature profile in the range 330-360°C a mixture of 95 parts by weight of fluoropolymer (4) and 5 parts by weight of ionomer (1).

Blend (C) is a composition prepared by melt compounding in an extruder at a temperature profile in the range 330-360°C a mixture of 97 parts by weight of fluoropolymer (3) and 3 parts by weight of ionomer (1).

Blend (D) is a composition prepared by melt compounding in an extruder at a temperature profile in the range 330-360°C a mixture of 97 parts by weight of fluoropolymer (2) and 3 parts by weight of ionomer (1).

Blend (E) is a composition prepared by melt compounding in an extruder at a temperature profile in the range 330-360°C a mixture of 50 parts by weight of fluoropolymer (4) and 50 parts by weight of ionomer (1).

Blend (F) is a composition prepared by melt compounding in an extruder at a temperature profile in the range 330-360°C a mixture of 90 parts by weight of fluoropolymer (4) and 10 parts by weight of ionomer (1).

Blend (G) is a composition prepared by melt compounding in an extruder at a temperature profile in the range 330-360°C a mixture of 90 parts by weight of fluoropolymer (4) and 10 parts by weight of ionomer (1) which has been previously neutralized by treatment with an aqueous solution of KOH 10 % wt at 80°C.

### Adhesion trials on compression molded specimens

A first set of trials aiming at assessing adhesion between polymides and fluoropolymers have been carried out on compression molded plaques.

Several plaques (dimensions : 130 × 130 × 0.3 mm) have been compression molded ; molding conditions are summarized in Table 1 here below.

**Table 1 - Molding conditions**

| Raw material | Preheating | | Moulding | | | Cooling |
|---|---|---|---|---|---|---|
| | Time (min) | T (°C) | Time (min) | T(°C) | P (bar) | |
| Fluoropolymer (1) | 5 | 290 | 4 | 290 | 40 | Quench with water |
| Fluoropolymer (2),(3) | 5 | 310 | 2 | 310 | 40 | |
| Fluoropolymer (4) Blend (C) | 5 | 310 | 2 | 310 | 40 | |
| Polyamide (1) | 5 | 325 | 2 | 325 | 40 | |

A 0.3 mm thick plaque of polyamide (1) was put in contact with each of the 0.3 mm thicj=k plaques of the fluoropolyers in a 0.6 mm thick frame with no pressure applied in a compression molding apparatus, by simply closing the plates of the press for assuring thermal conductivity; the plaques were thus heated at a temperature above the melting points of all the components for 10 minutes. In case of fluoropolymer (1), temperature was set at 300°C, while for fluoropolymers (3), (4) temperature was 330°C

Adhesion between the two plaques was thus evaluated by peeling. Adhesion was found to be good when it was impossible to detach the polyamide (1) plaque (which generally broke instead of undergoing peeling from fluoropolymer) and none when the two plaques were detached with no difficulty. Results are summarized in the following table (table 2).

**Table 2 - Adhesion tests**

| Run | 1^{st} layer | 2^{nd} layer | Adhesion |
|---|---|---|---|
| 1 | Polyamide (1) | Fluoropolymer (2) | None |
| 2 | Polyamide (1) | Fluoropolymer (3) | None |
| 3 | Polyamide (1) | Blend (C) | Good |
| 4 | Polyamide (1) | Fluoropolymer (1) | None |
| 5 | Blend (C) | Fluoropolymer (2) | Good |
| 6 | Blend (C) | Fluoropolymer (4) | Good |

### Coextrusion tests

Two Dr Collin 20 mm extruders having a length of 26 mm were used for two-layer pipe extrusion. The extruder processing the fluoropolymer was equipped with an Hardelloy screw. Both screws were characterized by a compression ration of 3:1:1 (fight depth 3.6 mm in the feeding section and 1 mm in the metering section) and a short compression zone (about 3 flights).

The modular coextrusion die consisted of a back plate, two toroidal flow distributors, a front plate and a die tip. The channel inside the die had an inner diameter of 19.4 mm and an outer diameter of 24.4 mm. A die tip and a mandrel tip were connected to the front plate in order to match the desired tubing dimensions and to extend the common flow path of the two layers to promote adhesion by pulling the extruded parison.

The die components are made out of either stainless steel (type 17-4-PH alias W Nb 1.4542 alias AISI 630) or Duranickel.

The die tip diameter was of 16 mm, and the mandrel tip diameter was of 11.5 mm, with a parallel length of 67.5 mm (L/h = 30).

The calibration and cooling device was a Rollepaal type VCU 63/2.2 system, operated under vacuum in the spray mode. The inner diameter of the calibrator was 8.3 mm.

The fluoropolymer and/or the blends were introduced into extruder E1 via a volumetric feeder in order to starve the screw and limit the torque. Extruder E 1 was run at 50 rpm, with the feeder index set at 20 %, which corresponded to a throughput of about 10 g/min for a material having a density of 1 (i.e. roughly 17 g/min for FEP or ETFE based materials and roughly 22 g/min for MFA based materials).

Polyamides were poured into the extruder hopper of extruder E2 and screw was permanently covered. The hopper, once filled with polyamide, was closed and conditioned with nitrogen to protect polyamides against atmospheric moisture. The extruder was run at 60 rpm, which corresponded to a mass throughput of about 20 g/min of polyamide.

Temperature profiles used in extruder E1 and extruder E2 as a function of extruded material are summarized in Table 3 and 4.

**Table 3 - Extrusion parameters (extruder E1)**

| Extruder E1 (inner layer) | Barrel temperature | | | Flange | Adaptor | Die inlet |
|---|---|---|---|---|---|---|
| | Zone 1 (°C) | Zone 2 (°C) | Zone 3 (°C) | Zone 4 (°C) | AuxC30/ZC1 | AuxC30/ZC2 |
| Fluoropolymer (2) or Blend (C) and (D) | 260 | 290- 300 | 320- 330 | unheated | 320-330 | 320-330 |
| Fluoropolymer (4) or blends (A),(B),(E), (F),(G) | 260 | 290- 310 | 320 | unheated | 320 | 320 |

**Table 4 - Extrusion parameters (extruder E2)**

| Extruder E2 (outer layer) | Barrel temperature | | | Flange | Adaptor | Die inlet |
|---|---|---|---|---|---|---|
| | Zone 1 (°C) | Zone 2 (°C) | Zone 3 (°C) | Zone 4 (°C) | AuxC28/ZC1 | AuxC28/ZC2 |
| Polyamide (1) | 280 | 310 | 310 | 250 | 310 | 310 |
| Polyamide (2) | 310 | 315 | 320 | 295 | 320 | 320 |
| Fluoropolymer (4) | 260 | 310 | 320 | 295 | 320 | 320 |

Adhesion between the inner and the outer layers of the coextruded tubing was analyzed by cutting lengths of the tubing longitudinally in half and then flexing and bending the resulting half of the tubing.

When the inner layer fell out of the outer layer, this was noted as "delamination" between layers, evidence of no adhesion. When the inner layer remained adhered to the outer layer, this was noted as "no delamination", which is a first indication of adhesion.

When the layers did not delaminate spontaneously, peeling tests were carried out to appreciate adhesion force between the two layers. Qualitative results are summarized, together with delamination tests in table 5 hereinafter.

**Table 5 - Coextruded pipes characterization**

| Run | Inner layer | Outer layer | Delaminating | Peeling test |
|---|---|---|---|---|
| 7 | Blend (B) | Polyamide (1) | No delamination | Start of adhesion |
| 8 | Blend (B) | Polyamide (2) | No delamination | Start of adhesion |
| 9 | Blend (D) | Polyamide (2) | No delamination | Peeling difficult to initiate |
| 10 | Blend (C) | Polyamide (2) | No delamination | Peeling difficult to initiate |
| 11 | Blend (B) | Fluoropolymer (4) | No delamination | Excellent adhesion |

### Small scale capillary rheometer tests

Adhesion between extruded materials was appraised on small scale using a capillary rheometer for producing multilayer cylindrical extrudates containing two layers of different materials. Thus, pellets of the two materials to be tested were sequentially charged into the reservoir of the rheometer and allowed to melt at a temperature higher than the melting points of both components. The capillary rheometer was equipped with a cylindrical die having a channel diameter of 3 mm. A cylindrically shaped extrudate was thus obtained by pushing the piston through the die; at least part of the cylindrical extrudate was found to have a multilayer structure as a result of the temporarily coaxial flow of the two different polymers through the die.

Extruded die were analyzed by cutting a length of the extrudate longitudinally in half and the flexing and bending the remaining half. Delaminating of the inner layer from the outer layer and adhesion between them were then qualitatively determined. Results are summarized in table 6.

| Run | Inner layer | Outer layer | Adhesion |
|---|---|---|---|
| 12 | Fluoropolymer (4) | Polyamide (2) | None |
| 13 | Ionomer (1) | Polyamide (2) | Good |
| 14 | Fluoropolymer (4) | Ionomer (1) | Excellent |
| 15 | Blend (E) | Polyamide (2) | Good |
| 16 | Blend (F) | Polyamide (2) | Fair |
| 17 | Blend (G) | Polyamide (2) | Some adhesion |

## Claims

1. A multilayer polymer structure [structure (S)] comprising a layer (α) comprising at least one polyamide [polymer (A)], said layer (α) being linked to a layer (γ) comprising at least one melt-processible fluoropolymer substantially free from recurring units derived from functional monomers [polymer (F)] via a layer (β), said layer (β) consisting of a polymer composition (C-1), said polymer composition (C-1) comprising from 100 % to 3 % by weight of at least one functional fluoropolymer [polymer (I)], with respect to the total weight of the composition, and from 0 to 97 % by weight of at least one melt-processible fluoropolymer substantially free from recurring units derived from functional monomers [polymer (F)], with respect to the total weight of the composition.

2. The multilayer polymer structure according to claim 1, wherein polymer (A) is an aromatic polyamide [polymer (AA)] comprising recurring units, more than 50 mole % of said recurring units comprising at least one aromatic group and an amide moiety (aromatic recurring units).

3. The multilayer polymer structure according to claim 2, wherein the polymer (AA) is a semi-aromatic polyamide [polymer (SAP)], comprising recurring units derived from the polycondensation reaction between at least one non-aromatic diacid (or derivatives thereof) and an aromatic or non-aromatic diamine, and/or recurring units derived from the polycondensation reaction between an aromatic or non-aromatic diacid (or derivatives thereof) and at least one non-aromatic diamine, and/or recurring units derived from the polycondensation reaction of at least one non-aromatic amino-carboxylic acid (or derivative thereof).

4. The multilayer polymer structure according to claim 3, wherein the polymer (SAP) is asemi-aromatic polyamide [polymer (SAP-1)] comprising recurring units, more than 50 mole % of said recurring units being obtained by the polycondensation reaction between at least one aliphatic diacid or derivative thereof and at least one aromatic diamine

5. The multilayer polymer structure according to claim 4, wherein the aromatic diamine is metaxylylenediamine (MXDA).

6. The multilayer polymer structure according to claim 4 or 5, wherein the aliphatic diacid is adipic acid.

7. The multilayer polymer structure according to claim 3, wherein the polymer (SAP) is a semi-aromatic polyamide [polymer (SAP-2)] comprising recurring units, more than 50 mole % of said recurring units being obtained by the polycondensation reaction between at least one aromatic diacid or derivative thereof and at least one aliphatic diamine.

8. The multilayer polymer structure according to claim 8, wherein the polymer (SAP-2) is a polyphthalamide, i.e. an aromatic polyamide comprising recurring units, more than 50 mole % of said recurring units being obtained by the polycondensation reaction between at least one phthalic acid, chosen among isophthalic acid (IPA), terephthalic acid (TPA) and (ortho)phthalic acid (PA), or derivative thereof, and at least one aliphatic diamine.

9. The multilayer polymer structure according to anyone of the preceding claims, wherein the polymer (F) is a hydrogen-containing fluoropolymer, preferably chosen among :
(F-1) TFE and/or CTFE copolymers with ethylene, propylene or isobutylene (preferably ethylene), with a molar ratio per(halo)fluoromonomer(s)/hydrogenated comonomer(s) of from 30:70 to 70:30, optionally containing one or more comonomers in amounts of from 0.1 to 30 % by moles, based on the total amount of TFE and/or CTFE and hydrogenated comonomer(s);
(F-2) Vinylidene fluoride (VdF) polymers, optionally comprising reduced amounts, generally comprised between 0.1 and 15 % by moles, of one or more fluorinated comonomer(s), and optionally further comprising one or more hydrogenated comonomer(s); and and mixtures thereof.

10. The multilayer polymer structure according to anyone of the preceding claims, wherein the polymer (F) is a per(halo)fluoropolymer.

11. The multilayer polymer structure of claim 10, wherein per(halo)fluoropolymer is selected among TFE copolymers comprising at least 2 % wt and at most 30 % wt of recurring units derived from at least one fluorinated comonomer chosen among the group consisting of :
(i) perfluoroalkylvinylethers complying with formula CF₂=CFOR_{f1'}, in which R_{f1'} is a C₁-C₆ perfluoroalkyl, e.g. -CF₃, -C₂F₅, -C₃F_{7;} and/or
(ii) perfluoro-oxyalkylvinylethers complying with formula CF₂=CFOX₀, in which X₀ is a C₁-C₁₂ perfluorooxyalkyl having one or more ether groups, like perfluoro-2-propoxy-propyl; and/or
(iii) C₃-C₈ perfluoroolefins, such as hexafluoropropylene.

12. The multilayer polymer structure according to anyone of the preceding claims, wherein the polymer (I) comprises recurring units derived from at least one fluorinated functional monomer chosen among :
(M1) sulfonated perfluoroolefin of formula (M1): 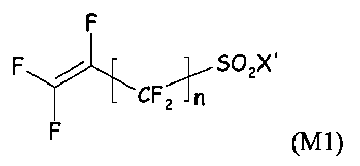 wherein n is an integer between 0 and 6 and X' is chosen among H, halogens (Cl, Fl, Br, I), -O⁻M⁺, wherein M⁺ is a cation selected among H⁺, NH₄⁺, K⁺, Li⁺, Na⁺, or mixtures thereof; preferably X' is fluorine; preferred sulfonated fluoroolefin are those complying with formulae (M1-A) and (M1-B) : 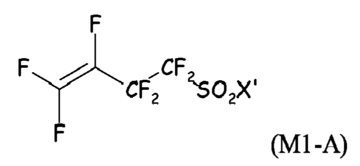 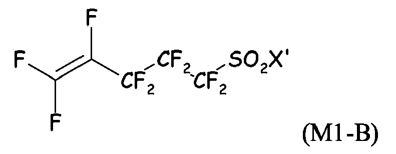 wherein X' has the same meaning as above defined;
(M2) sulfonated perfluorovinylethers of formula (M2) : 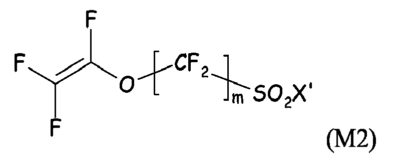 wherein m is an integer between 1 and 6 and X' is chosen among H, halogens (Cl, Fl, Br, I), -O⁻M⁺, wherein M⁺ is a cation selected among H⁺, NH₄⁺, K⁺, Li⁺, Na⁺, or mixtures thereof; preferably X' is fluorine; preferred are sulfonated perfluoroethers of formulae (M2-A) and (M2-B) : 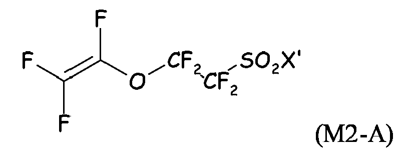 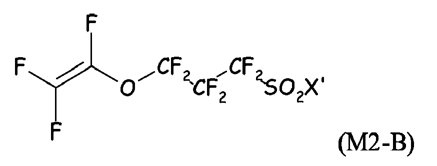 wherein X' has the same meaning as above defined; most preferably, the sulfonated perfluorovinylether is perfuoro-5-sulphonylfluoride-3-oxa-1-pentene (also known as "SFVE") of formula (M2-C) : 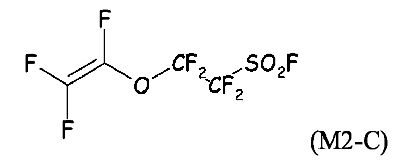
(M3) sulfonated perfluoroalkoxyvinylethers of formula (M3) : 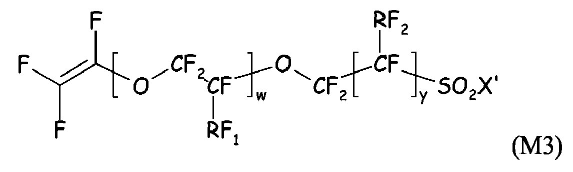 wherein w is an integer between 0 and 2, RF₁ and RF₂, equal or different at each occurrence, are independently -F, -Cl or a C₁₋₁₀ perfluoroalkyl group, optionally substituted with one or more ether oxygens, y is an integer between 0 and 6 and X' is chosen among H, halogens (Cl, Fl, Br, I), -O⁻ M⁺, wherein M⁺ is a cation selected among H⁺, NH₄⁺, K⁺, Li⁺, Na⁺, or mixtures thereof; preferably X' is fluorine; preferred sulfonated perfluoroalkoxyvinylether complies with formula (M3) here above, wherein w is 1, RF₁ is -CF₃, y is 1 and RF₂ is -F and X' is F [formula (M3-A), also called "PSEVE" (perfluoro-2-(2-fluorosulfonylethoxy)propylvinyl ether)] : 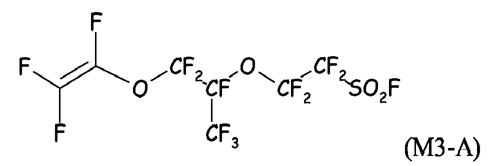
(M4) perfluoroalkoxyvinylether carboxylates of formula (M4) : 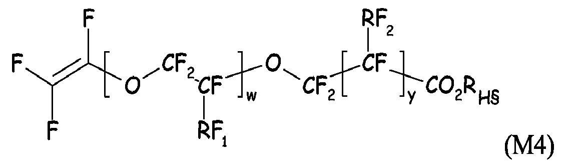 wherein w, y, RF₁ and RF₂ have the same meaning as above defined, and R_{H§} is a C₁₋₁₀ alkyl or fluoroalkyl group; preferred perfluoroalkoxyvinylether carboxylate complies with formula (M4) here above, wherein w is 0, y is 2 and RF₂ is -F [formula (M4-A)] : 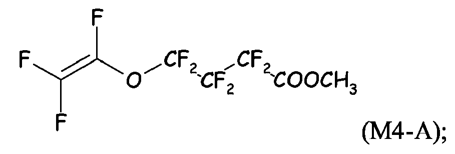
(M5) sulfonated aromatic (per)fluoroolefins of formula : 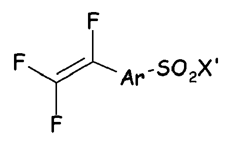 wherein Ar is a C₃₋₁₅ aromatic or heteroaromatic moiety and X' is chosen among H, halogens (Cl, Fl, Br, I), -O⁻M⁺, wherein M⁺ is a cation selected among H⁺, NH₄⁺, K⁺, Li⁺, Na⁺, or mixtures thereof; preferably X' is fluorine;
and
(M6) mixtures thereof.

13. The multilayer polymer structure according to anyone of the preceding claims, wherein the polymer (I) is a functional per(halo)fluoropolymer.

14. The multilayer polymer structure according to anyone of the preceding claims, wherein the polymer (I) is a functional per(halo)fluoropolymer comprising recurring units derived from at least one functional per(halo)fluoromonomer and at least one per(halo)fluoromonomer chosen among :
- C₃-C₈ perfluoroolefins, preferably tetrafluoroethylene (TFE) and/or hexafluoropropylene (HFP);
- chloro- and/or bromo- and/or iodo-C₂-C₆ per(halo)fluoroolefins, like chlorotrifluoroethylene (CTFE) and/or bromotrifluoroethylene;
- perfluoroalkylvinylethers (PAVE) complying with formula CF₂=CFOR_{f1}, in which R_{f1} is a C₁-C₆ perfluoroalkyl, e.g. -CF₃, -C₂F₅, -C₃F₇;
- perfluoro-oxyalkylvinylethers complying with formula CF₂=CFOX₀, in which X₀ is a a C₁-C₁₂ perfluorooxyalkyl having one or more ether groups, like perfluoro-2-propoxy-propyl.

15. The multilayer polymer structure according to claim 14, wherein the polymer (I) is selected among TFE copolymers comprising :
- from 5 to 20 % by moles of recurring units derived from PSEVE and/or SFVE, in their -SO₂F or -SO₂X" form, wherein X" is chosen among H, halogens (Cl, Fl, Br, I), -O⁻M⁺, wherein M⁺ is a cation selected among H⁺, NH₄⁺, K⁺, Li⁺, Na⁺, or mixtures thereof; preferably X" is fluorine; and
- from 95 to 80 % by moles of recurring units derived from TFE.

16. The multilayer polymer structure according to anyone of the preceding claims, wherein the composition (C-1) further comprises at least one polyamide [polymer (A)].

17. The multilayer polymer structure according to anyone of the preceding claims, wherein the layer (α) further comprises an impact modifier (I1).

18. A process for manufacturing the multilayer polymer structure [structure (S)] according to anyone of the preceding claims.

19. A shaped article comprising the structure (S) according to anyone of the preceding claims.

20. A multilayer tube [tube (T-1)] comprising a layer (α) comprising at least one polyamide [polymer (A)] and a layer (β) comprising a polymer composition (C-1), said polymer composition (C-1) comprising from 100 % to 3 % by weight of at least one functional fluoropolymer [polymer (I)], with respect to the total weight of the composition, and from 0 to 97 % by weight of at least one melt-processible fluoropolymer substantially free from recurring units derived from functional monomers [polymer (F)], with respect to the total weight of the composition.

21. A multilayer tube [tube (T-2)] comprising a layer (γ) comprising at least one melt-processible fluoropolymer substantially free from recurring units derived from functional monomers [polymer (F)] and a layer (δ) comprising a polymer composition (C-2), said composition (C-2) comprising from 100 % to 3 % by weight of at least one functional fluoropolymer [polymer (I)] with respect to the total weight of the composition and from 0 to 97 % by weight of at least one polyamide [polymer (A)] with respect to the total weight of the composition.

22. A polymer composition (C-3) useful for bonding polymer (F) and polymer (A) interfaces, said composition (C-3) comprising :
(c1) at least one polyamide [polymer (A)];
(c2) at least one functional fluoropolymer [polymer (I)]
(c3) optionally, at least one impact modifier (I-1).

23. The polymer composition according to claim 22, wherein the polymer (A) is wherein the polymer (A) is a semi-aromatic polyamide [polymer (SAP-1)] comprising recurring units, more than 50 mole % of said recurring units being obtained by the polycondensation reaction between at least one aliphatic diacid or derivative thereof and at least one aromatic diamine.

24. The polymer composition according to claim 22, wherein the polymer (A) is a semi-aromatic polyamide [polymer (SAP-2)] comprising recurring units, more than 50 mole % of said recurring units being obtained by the polycondensation reaction between at least one aromatic diacid or derivative thereof and at least one aliphatic diamine.

25. The polymer composition according to anyone of claim 22 to 24, wherein the polymer (I) is a functional per(halo)fluoropolymer comprising recurring units derived from at least one functional per(halo)fluoromonomer and at least one per(halo)fluoromonomer chosen among :
- C₃-C₈ perfluoroolefins, preferably tetrafluoroethylene (TFE) and/or hexafluoropropylene (HFP);
- chloro- and/or bromo- and/or iodo-C₂-C₆ per(halo)fluoroolefins, like chlorotrifluoroethylene (CTFE) and/or bromotrifluoroethylene;
- perfluoroalkylvinylethers (PAVE) complying with formula CF₂=CFOR_{f1} in which R_{f1} is a C₁-C₆ perfluoroalkyl, e.g. -CF₃, -C₂F₅, -C₃F₇;
- perfluoro-oxyalkylvinylethers complying with formula CF₂=CFOX₀, in which X₀ is a a C₁-C₁₂ perfluorooxyalkyl having one or more ether groups, like perfluoro-2-propoxy-propyl.

26. The polymer composition according to claim 25 wherein the polymer (I) is selected among TFE copolymers comprising :
- from 5 to 20 % by moles of recurring units derived from PSEVE and/or SFVE, in their -SO₂F or -SO₂X" form, wherein X" is chosen among H, halogens (Cl, Fl, Br, I), -O⁻M⁺, wherein M⁺ is a cation selected among H⁺, NH₄⁺, K⁺, Li⁺, Na⁺, or mixtures thereof; preferably X" is fluorine; and
- from 95 to 80 % by moles of recurring units derived from TFE.

27. The polymer composition according to anyone of claims 22 to 26, wherein the composition comprises a melt-processible fluoropolymer substantially free from recurring units derived from functional monomers [polymer (F)].

28. The polymer composition according to claim 27, wherein the polymer (F) is a per(halo)fluoropolymer selected among TFE copolymers comprising recurring units derived from at least one fluorinated comonomer chosen among the group consisting of :
(i) perfluoroalkylvinylethers complying with formula CF₂=CFOR_{f1'}, in which R_{f1'} is a C₁-C₆ perfluoroalkyl, e.g. -CF₃, -C₂F₅, -C₃F_{7;} and/or
(ii) perfluoro-oxyalkylvinylethers complying with formula CF₂=CFOX₀, in which X₀ is a C₁-C₁₂ perfluorooxyalkyl having one or more ether groups, like perfluoro-2-propoxy-propyl; and/or
(iii) C₃-C₈ perfluoroolefins, such as hexafluoropropylene.
